# EUROPEAN PATENT APPLICATION

(11) **EP 0 902 033 A1**
(43) Date of publication of application: **17.03.1999**
(21) Application number: 98306823.0
(22) Date of filing: 26.08.1998
(51) Int. Cl.: C07F 9/6561, G03C 1/685, G11B 7/24

(54) **Spiro compound and photochromic material**

(30) Priority: 27.08.1997 JP 244883/97
(71) Applicant: Nissho Iwai Bentonite Co.,Ltd., Minato-ku, Tokyo (JP)
(72) Inventor: Takagi, Katsuhiko, Nagoya-shi, Aichi-ken (JP)
(74) Representative: Phillips, Patricia Marie

(57) **Abstract**

This invention has for its object to provide a novel spiro compound and photochromic materials prepared by bonding covalently the spiro compound to zirconium stratiform substance via a phosphoric atom. The invention includes 1',3',3'-trimethyl-spiro[2H-1-benzopyran-2,2'-indoline]-6-methylphosphonic acid represented by the following formula (I) and its salts, and photochromic materials comprising the said compound.

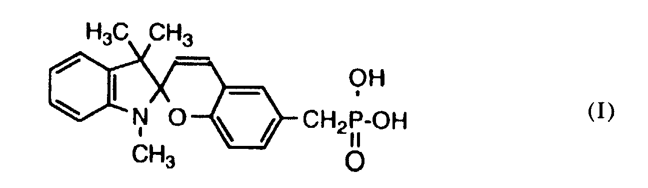

## Description

The present invention relates to a novel spiro compound, to the bonding substance of the said compound to zirconium phosphate, and to photochromic materials comprising the said bonding substance.

It may be expected that the substance having the property of reversible photo- or thermal-conversion between a spiro compound (SP) and a compound having merocyanine structure (MC) is used for photo- or thermal-recording medium, because there are large differences in the specral terms between colorless and red color.

In order to take advantage of the material having such vivid color change, it is necessary to be materialized in solid form. Such solid-materialization is carried out, for example, by applying SP/MC substance to the paper surface-processed with clay such as kaolin and the like. As a result, there may be provided with writing-in function by irradiation of ultra-violetlight and extincting function by exposure to visible light.

Hitherto, the aforesaid fixation has been carried out by incorporating the said substance into polymer matrix or Langmuir-Brogett's membrane (BP). That is, binding of SP/MC substance to any medium for the fixation is achieved by either mere physical mixing or electrostatic interaction. In the latter case, since photochromism arises from ionic adsorption, homogenous dispersion is not achieved, or rather agglutination gives rise to thermal stability of a merocyanine state. There was therefore a tendency to lack homogeneity and stability in the occurrence of photochromism.

The present invention intends to preserve the specific character of a vivid and excellent photochromic material including the SP/MC system and simultaneously to conquer the aforesaid disadvantage inherent in the prior art.

The present invention provides a novel SP compound, one end of which molecule is capable of bonding covalently to a zirconium phosphate layer, and means conquering the disadvantage arising from physical mixing and/or electrostatically bonding inherent in the prior art.

According to an embodiment of the invention, a novel SP compound having the following formula (I) is provided:

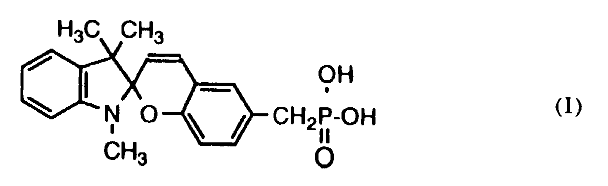

Where the aforesaid novel SP compound is bonded to a stationary layer such as a stratiform zirconium phosphate compound as a photochromic material, it may preferably be used in the form of cationic salt, most preferably anilinium salt.

In an another embodiment of the invention, a novel SP compound of the aforesaid formula (I), preferably its salt, is capable of bonding covalently to a phosphoric atom of a stratiform zirconium phosphate compound by means of a terminal methylene group of the SP compound to provide a novel stratiform compound.

In a further embodiment of the invention, photochromic materials comprising such a stratiform compound are provided.

A novel SP compound of the invention can be prepared by a known method per se, according to the following reaction scheme (II):

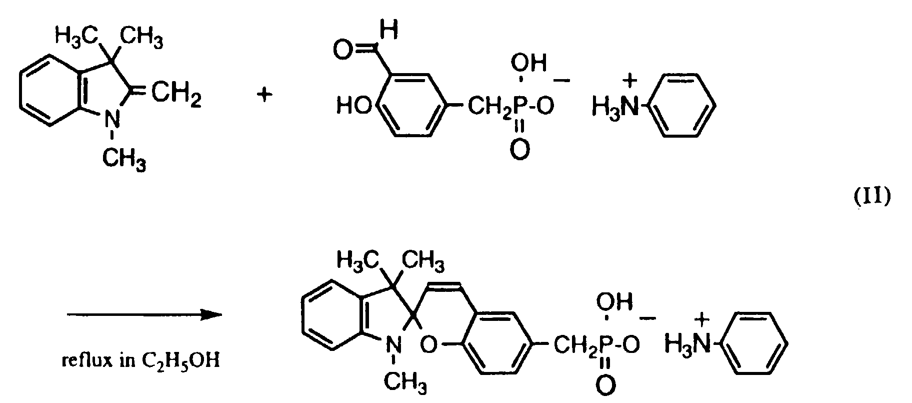

The aforesaid reaction proceeds as follows. That is, 3-formyl-4-hydroxybenzylphosphonic acid diester, for example diethyl ester, is dissolved in a suitable solvent such as methanol. An excess amount of a base, for example, 1.5 equivalents of a base (aniline in the above reaction scheme) are then added thereto, followed by stirring at a temperature in the vicinity of ambient temperature. There is no particular limitation upon the stirring period, but it takes usually about an hour until the formation of anilinium salt is completed.

The anilinium salt thus obtained is reacted with 2-methylene-1,3,3-trimethylindoline to form the SP compound of the invention.

The reaction is advantageously carried out using an approximately stoichiometric amount of the respective components in the presence of a suitable solvent such as ethanol.

In order to accelerate the reaction, it is preferably carried out upon heating, generally by heating under reflux. There is no particular limitation upon the reaction time, but it is usually complete within about 10 hours.

After completion of the reaction, the reaction mixture is freed from the solvent under reduced pressure and the product, if necessary, can be purified by conventional means, such as recrystallization, chromatography and the like.

A novel SP compound of the invention thus prepared is subjected to fixation as follows.

Where the material to be fixed consists of a zirconium compound, an aqueous solution of dichlorozirconium oxide is mixed with an aqueous solution of hydrofluoric acid to prepare a mixed solution (Solution A).

In this case, the proportion of the respective components is preferably selected so as to be a level of approximately [Zr]/[F]=1/4.

Subsequently, a SP compound of the invention is dissolved in water to prepare an aqueous solution, which is mixed with Solution A. In this case, to the aqueous solution of the SP compound is preferably added long chain alkylphosphonic acid, for example alkylphosphonic acid containing more than 8 carbon atoms, to prepare a mixed solution consisting of spiro compound-phosphonic acid and alkylphosphonic acid (Solution B). The reason is that it is not only uneconomic to bond a phosphoric atom on the surface of a zirconium phosphate layer with the SP compound but also sensitive color change is not expected. In addition, by forming an ester bond on a zirconium layer with a part or a most part of alkylphosphonic acid, it is possible to change internal polarity between layers.

There is no particular limitation upon a ratio of Solution A to Solution B but a 1 M aqueous solution of total phosphonic acid is mixed with a insufficient amount of a 1 M aqueous solution of zirconium, for example, in a ratio of about 1:3.

The reaction proceeds usually by stirring the mixed solution upon heating, for example at near 60°C. Because of a relatively slow rate of the reaction, the reaction time is usually long and the reaction can be completed by stirring for a period of from 1 week to 10 days.

With the progress of the reaction, hydrogen fluoride, hydrogen chloride and water are gradually evaporated and finally a red solid is left behind.

After the solid is ground and washed successively with water and methanol, there is obtained a Zr/SP complex compound.

The Zr/SP complex compound of the invetntion can also be obtained by reacting an aqueous solution (Solution C) prepared by mixing SP compound-phosphonic acid with orthophosphoric acid in an arbitrary ratio, instead of Solution B, with Solution A. The reaction is carried out in a similar manner as that of Solution B with Solution A.

In this case, the hydroxyl groups arising from phosphate existing partially on a solid surface to be esterified are partially esterified using an exess amount of an aqueous solution comprising N-long chain alkylpridinium halide, preferably bromide by stirring upon heating. The desired quaternarized product deposited as a precipitate is collected by filtration and washed successively with water, methanol and the like. The number of carbon atoms in the long chain alkyl group is in a range of from 8 to 18.

As aforesaid, the SP compound/zirconium phosphate complex substance of the invention is a compound formed by a covalent bond.

In the case of the reaction product of Solution A with Solution B, a phosphoric atom on a two-dimensional plane layer (P-Zr layer) bonds covalently with a terminal methylene group of the spiro compound and/or a long chain alkyl group. The composition is shown by the following formula (III):

Zr_{1/2}(SP-CH₂-PO₃₎ₘ(alkyl-PO₃)ₙ (III)

wherein m + n = 1.

In the case of the reaction product of Solution A with Solution C, the composition of the reaction product is shown the following formula (IV):

Zr_{1/2}(SP-CH₂-PO₃)ₘ(HOPO₃)ₙ (IV)

wherein m + n = 1.

The SP/Zr complex substance of the invention is thin membrane-processed as powder or cast-film. The substance has the property of photochromism interconvertible between colorless spiro structure and red merocyanine structure by light, heat or stimulation, it being therefore useful as photo recording materials, indicating materials and nonlinear optics materials.

That is, a SP compound part in the complex substance according to the invention extincts in the presence of light and reverts to colored form in the dark and shows, as it is called, reverse photochromism. The composites having photochromism have an affinity for inorganic thin layer by sol-gel technique, which has been briskly studied in recent years, and it is possible to complex with Langmuir-Brogett (LB) type fatty bimolecular membrane, polylayer thin membrane and polyelectrolyte membrane.

As the complex substance is fusible in inorganic base plate or silicate glass, it is promising as interface of organic and inorganic complexing.

As aforesaid, the SP/Zr complex substance of the invention is linked to a base material by covalent bond. In the known technique made an attempt to disperse or orientate the surface-active spiro compound, which comprises long chain alkyl groups and ionic substituents, into clay layer such as montmorillonite and the like, that is, in the intercalation absorbed by ionic interaction, there was a fault such that the material leaks out of a layer depending upon the kinds of the medium used. Accordingly, the material of the invention is advantageously freed from such faults.

In a preferred embodiment of the present invention, in addition to the spiro compound-phosphonic acid, long chain alkylphosphonic acids bond covalently to zirconium carrier in an arbitrary ratio so as to be oriented on layer surface and, as a result, the substituent amount of spiro compound chromophore is controlled arbitrarily to bring about occurrence of photochromism fitted the purpose.

In the aforesaid reaction of Solution A with Solution C, hydroxyl groups arising from phosphoric acid exist on the outer layer surface. In the case where the hydroxyl groups can be derived to a long chain alkylpyridinium salt via an alkaline metal salt, such as sodium salt, the substituent amount of spiro compound chromophore can be controlled arbitrarily and the reverse photochromism is retained.

The following examples explains the invention in more detail.

### Example 1.

To a methanol solution of diethyl 3-formyl-4-hydroxybenzylphosphonate are added 1.5 equivalents of aniline, and the mixture was stirred at room temperature for an hour. The reaction mixture is concentrated under reduced pressure. The residue containing 0.74 g (2.39 mmol) of resulted anilinium salt is refluxed in 30 ml of ethanol with 0.42 g (2.39 mmol) of 2-methylene-1,3,3-trimethylindoline for 10 hours. After completion of the reaction, the reaction mixture is freed from the solvent by distillation under reduced pressure to give 0.70 g of the desired anilinium 1',3',3'-trimethyl-spiro[2H-1-benzo-pyran-2,2'-indoline]-6-methylphosphonate in a 63% yield.

NMR (D₂O) δ : 1.5-1.7(6H, t), 2.8-3.3(3H, m), 3.9-4.0(2H, d), 6.9-8.5(8H, m).

λ ₘₐₓ (H₂O): 448 nm, 280 nm.

### Example 2.

Hydrofluoric acid (47%) is added to a 1.2 M aqueous solution of ZrOCl₂-8H₂O so as to be [Zr]/[F]=1/4 to make a mixed aqueous solution (Solution A). On the other hand, long chain alkylphosphonic acid (number of carbon atom is 10) is mixed with SP compound-phosphonic acid prepared in Example 1 in arbitrary proportion to prepare a 1.0 M aqueous solution of total phosphonic acids (Solution B). Solution A and Solution B are gradually mixed in a ratio of 3:1 and the resulting mixture is stirred at 60°C for a week. In the course of this treatment, hydrogen fluoride, hydrogen chloride and water are allowed to evaporate leaving a red solid behind. The solid is ground in a mortar and subsequently washed successively with water and methanol. There is obtained the stratiform substance comprising SP compound-phosphonic acid-substituted ziruconium which is partially esterified with long chain alkylphosphonic acid or unesterified.

### Example 3.

Orthophosphoric acid is mixed with the SP-phosphonic acid in an arbitrary proportion to prepare a 1.0 M aqueous solution of total amount of phosphoric acid and phosphonic acid (Solution C). The procedure of Example 2 is repeated but using Solution C instead of Solution B. Solution A and Solution C are gradually mixed in a ratio of 3:1 and the mixture is worked-up in a similar manner as Example 2. There is obtained the stratiform substance comprising SP compound-phosphonic acid-substituted ziruconium in which phosphoric acid is partially esterified or unesterified.

To the stratiform substance obtained above are added five-fold equivalents of a 7 mM aqueous solution of N-long chain alkylated pyridinium bromide, and the mixture is stirred at 80°C for 8 hours. The deposited precipitates are collected by filtration and washed successively with water and methanol. There is obtained the stratiform substance comprising SP compound-phosphonic acid-substituted ziruconium which is partially quaternarized with pyridinium salta or unquaternarised.

### Example 4.

Procedure of Example 2 is repeated, but changing a molar ratio of the SP compound-phosphonic acid to desylphosphonic acid to from 1:0 to 0.1:0.9, there is obtained a stratiform compound bonded covalently to zirconium phosphate as red powder, which shows an absorption maximum at between 459 nm and 470 nm. The product shows reverse photochromism, that is, repeating reversible color extinction and color development by light-irradiation. There are prepared colored materials in arbitrary portions of alkylphosphonic acid but the production of colored material is not observed in a mixing ratio of less than 10% of alkylphosphonic acid.

### Example 5.

Procedure of Example 3 is repeated, but changing a molar ratio of SP compound-phosphonic acid to desylphosphonic acid to from 1:0 to 0.1:0.9, there is obtained a stratiform substance bonded covalently to zirconium phosphate (phosphoric acid part of which may be reacted with long chain alkylated pyridinium bromide to be hydrophobilized) as red powder, which shows an absorption maximum at between 465 nm and 452 nm. The product shows reverse photochromism, that is, repeating reversible color extinction and color development by light-irradiation. There are prepared colored materials in arbitrary portions of the SP compound-phosphonic acid and phosphoric acid.

Thus, the novel spiro compound of the invention bonds covalently to zirconium stratiform substance to form novel photochromic materials having stable reverse photochromic property. The photochromic materials have an effective use as excellent photoresponding complex material by thin membrane-processing of base plate surface.

## Claims

1. 1',3',3'-Trimethyl-spiro[2H-1-benzopyran-2,2'-indoline]-6-methylphosphonic acid of a formula (I): 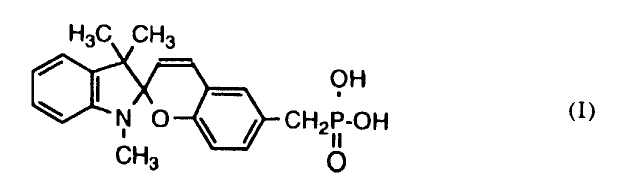 and its salts.

2. Compound according to claim 1, such that a cation of the said salts is anilinium.

3. Compound according to claim 1 or 2, such that a methylene group of the said compound bonds covalently to a phosphoric atom of the stratiform compound comprising zirconium phosphate.

4. Compound according to any one of claim 1 to 3, such that a long chain alkyl group bonds to a phosphoric atom of a part of zirconium phosphate in a stratiform substance and a methylene group of the said compound bonds covalently to the remaining phosphoric atom.

5. Photochromic materials comprising a compound according to claim 3 or 4.
